# EUROPEAN PATENT APPLICATION

(11) **EP 4 541 636 A1**
(43) Date of publication of application: **23.04.2025**
(21) Application number: 23203975.0
(22) Date of filing: 17.10.2023
(51) Int. Cl.: B60L 15/20

(54) **ELECTRIC VEHICLE AND METHOD OF CONTROL**

(71) Applicant: MAHLE International GmbH, 70376 Stuttgart (DE)
(72) Inventor: Franco Revilla, Jose Vicente, 34810 Matalbaniega (ES)

(57) **Abstract**

An electric vehicle (1) comprises a frame (2) supporting at least one wheel (3, 4), and an electric motor (5) arranged for driving the wheel (3, 4). The electric motor (5) comprises a stator (6) having a plurality of stator coils (7), and a rotor (9) arranged rotatably with respect to the stator (6) and drivingly connected to the wheel (3, 4). The electric vehicle (1) further comprises a battery (12) and a motor controller (11), which connected to the battery (12) and the electric motor (5), for controlling the current in the stator coils (7). The motor controller (11) is configured in a first motor operating mode to supply current to the stator coils (7) for inducing a rotation of the rotor (9) for driving the wheel (3, 4). According to the invention the motor controller (11) is configured in a second motor operating mode to supply current to at least one of the stator coils (7) suitable for inducing a vibration of at least one of the stator coils (7) or the rotor (9), without inducing a rotation of the rotor (9) for driving the wheel (3, 4).

## Description

### TECHNICAL FIELD

The invention relates to an electric vehicle according to the preamble of independent claim 1.

The invention furthermore relates to a method of controlling an electric motor according to the preamble of independent claim 9.

### BACKGROUND ART

Electric vehicles can be provided with means for providing information to a user via an audible signal. For example, an audible signal may be provided to the user when switching the power on or off. The audible signal is provided by a dedicated speaker arranged somewhere on the vehicle. In the case of an electric bicycle, e.g. in US2018268668A1, the audible signal can be provided by a speaker in the cycle computer.

### SUMMARY

The electric vehicle according to the invention as defined in claim 1 has the advantage that a dedicated speaker or vibration device is not required to provide a signal to the user. The number of parts and the complexity of manufacture of the electric vehicle can therefore be reduced, thus reducing costs. This is particularly beneficial in smaller electric vehicles such as electrically assisted bicycles or electric kick scooters.

This object is achieved by using the electric drive motor, which drives a wheel of the electric vehicle, to provide the audible signal or vibration.

In particular, according to a first aspect of the invention, an electric vehicle is provided comprising a frame supporting at least one wheel. An electric motor is arranged for driving the wheel, the electric motor comprises a stator having a plurality of stator coils, and a rotor arranged rotatably with respect to the stator and drivingly connected to the wheel. Furthermore, a battery and a motor controller for controlling the current in the stator coils are provided, the motor controller being connected to the battery and the electric motor. The motor controller is configured in a first motor operating mode to supply current to the stator coils for inducing a rotation of the rotor for driving the wheel, and wherein the motor controller is configured in a second motor operating mode to supply current to at least one of the stator coils suitable for inducing a vibration of at least one of the stator coils or the rotor, without inducing a rotation of the rotor for driving the wheel.

Alternatively, the motor controller can be configured in the second motor operating mode to supply current to at least one of the stator coils suitable for inducing a vibration at a predetermined frequency of at least one of the stator coils or the rotor independently of the rotor speed. Therefore, an audible signal can be produced when the electric vehicle is moving. This could be a single tone, or a sequence of tones at different frequencies. This could be useful to alert other traffic participants of the presence of the electric vehicle.

The motor can be for example a permanent magnet motor whereby the stator is fixed with respect to the vehicle frame and the rotor comprises circumferentially arranged permanent magnets which rotate together with respect to the stator. The plurality of stator coils are divided into a plurality of different phases, wherein the coils are arranged opposite the permanent magnets in the radial direction. For rotation of the rotor, the motor controller controls the current in the plurality of stator coils to energize the coils sequentially, wherein the frequency of the alternating current (AC) in each of the stator coils is proportionate to the speed of the rotor. According to the invention, the motor controller can also be operated to supply current to at least one of the stator coils suitable for inducing a vibration of at least one of the stator coils or the rotor, without inducing a rotation of the rotor for driving the wheel. The vibration of at least one of the coils or the rotor is preferably in the frequency range of 20 Hz to 20 KHz, thus in the audible frequency range. It may however also be possible to vibrate the coils or the rotor outside the audible frequency range to produce an audible signal via the resonant vibration of parts of the electric vehicle connected to the electric motor.

By applying current to one of the stator coils, the coil generates a magnetic field such that it is attracted towards an opposing magnet of the rotor. By arranging the coil in the stator, such that a small movement of the coil is permitted, the coil can be made to vibrate within the stator if an alternating current (AC) or a pulsed direct current (DC) is applied to it. In the second motor operating mode an alternating current (AC) or a pulsed direct current (DC) can be supplied to at least one of the stator coils within the frequency range in the range of 20 Hz to 20 KHz.

At least one of the stator coils can be not rigidly fixed with respect to other parts of the stator, e.g. the steel laminations or stator packet, to allow a radial displacement of the stator coil with respect to the rotor. Alternatively, if the stator coil is held rigidly in the stator, for example by overmolding of the stator coils, then the vibration can be generated in the rotor due the radial tolerances in the rotor bearings allowing a small radial movement of the rotor relative to the stator.

The vibration, or sound thereby generated, may be used for indicating to a user that the power to the vehicle has been turned on or off. In another embodiment, the vibration or sound thereby generated, may be used for indicating to a user the locking or unlocking of the electric vehicle. In a further embodiment, the vibration or sound thereby generated, may be used as an an alarm when a suspected theft is detected.

According to one embodiment of the invention the motor controller is configured in the second motor operating mode to supply current to at least one of the stator coils for inducing a predetermined sequence of vibrations at at least two different frequencies of at least one of the stator coils or the rotor, without inducing a rotation of the rotor for driving the wheel. In this way a recognizable acoustic signal can be emitted by the motor. The sequence of vibrations could for example generate a sequence of audible sounds to play a predetermined melody.

In the second motor operating mode the motor controller can be configured to not supply current to at least one of the plurality of stator coils. Indeed, a vibration can be generated by supplying an alternating current (AC) or a pulsed direct current (DC) to only one of the plurality of coils. The power supplied by the battery to generate the vibration is therefore low.

The motor controller can be configured in a third motor operating mode to supply current to the stator coils for inducing a vibration at a predetermined frequency of at least one of the stator coils or the rotor independently of the rotor speed. In this way a vibration can be introduced during operation of the motor which can be translated into an audible signal to the user. The vibration or audible signal in this operating mode may be used in combination with a proximity sensor to alert the user of traffic approaching from behind. Alternatively, it could be used to indicate battery level or vehicle speed.

In an advantageous embodiment the electric vehicle is an electrically assisted bicycle, otherwise known as a pedelec, or an electric kick scooter.

According to a second aspect of the invention a method of controlling an electric motor is provided, the electric motor being drivingly connected to a wheel of an electric vehicle and comprising a stator having a plurality of stator coils, and a rotor arranged rotatably with respect to the stator and drivingly connected to the wheel. The method comprising providing a battery and a motor controller, connected to the battery and the electric motor, for controlling the current in the stator coils. In a first motor operating mode, the motor controller supplies current to the stator coils for inducing a rotation of the rotor for driving the wheel, and in a second motor operating mode, the motor controller supplies current to at least one of the stator coils for inducing a vibration of at least one of the stator coils or the rotor, without inducing a rotation of the rotor for driving the wheel.

In the second motor operating mode the motor controller can supply current to at least one of the stator coils for inducing a predetermined sequence of vibrations at at least two different frequencies of at least one of the stator coils or the rotor, without inducing a rotation of the rotor for driving the wheel. This can be achieved by changing the frequency of the alternating current (AC) or pulsed direct current (DC) supplied to the coil. The motor can therefore be capable of playing predetermined melodies.

In a further embodiment there is a third motor operating mode, wherein current is supplied to the stator coils for inducing a vibration at a predetermined frequency of at least one of the stator coils or the rotor independently of the rotor speed. In this way a vibration can be introduced during operation of the motor which can be translated into an audible signal to the user. The vibration or audible signal in this operating mode may be used in combination with a proximity sensor to alert the user of traffic approaching from behind. Alternatively, it could be used to indicate battery level or vehicle speed.

In particular, in the second motor operating mode the motor controller does not supply current to at least one of the plurality of stator coils.

In particular, in the second motor operating mode an alternating current (AC) or a pulsed direct current (DC) is supplied to at least one of the stator coils within the frequency range in the range of 20 Hz to 20 KHz.

### BRIEF DESCRIPTION OF THE DRAWINGS

Embodiments will now be described by way of example only with reference to the accompanying drawings, in which:
Figure 1 is side view of an electric vehicle according to one embodiment of the invention.
Figure 2 shows schematically a cross-sectional view of an electric motor according to one embodiment of the invention.

### DETAILED DESCRIPTION

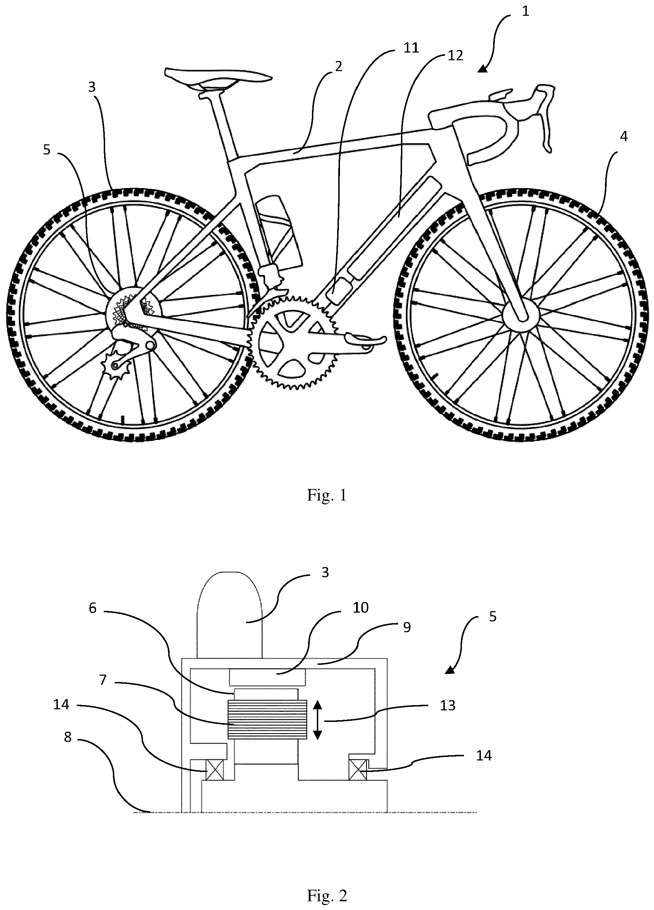

The invention will now be described with respect to figure 1, which shows an electrically assisted bicycle 1. The invention however also applies to other electric vehicles, in particular micro mobility vehicles, such as electric kick scooters or electric skateboards, or one or two wheeled self-balancing personal transporter devices (such as Segway^{®}).

The electric vehicle is provided with a frame 2 supporting a first wheel 3 and a second wheel 4. An electric motor 5 is arranged for driving one of the wheels 3, 4. In the electrically assisted bicycle 1 shown, the electric motor 5 is a rear hub motor, i.e. located in the hub of the rear wheel 3. The electric motor 5 could however be a mid-drive motor arranged in the area of the bicycle bottom bracket or a front hub motor.

The electric motor 5, shown by way of example in figure 2, can be a permanent magnet motor having a stator 6 with a plurality of stator coils 7. The stator coils 7 (only one is shown in figure 2) are arranged circumferentially around the motor axis 8. The stator 6 is rotationally fixed with respect to the vehicle frame 2. The rotor 9 comprises a plurality of circumferentially arranged permanent magnets 10, whereby the rotor 9 rotates with respect to the stator 6. The plurality of stator coils 7 are divided into a plurality of different phases, wherein the coils 7 are arranged opposite the permanent magnets 10 in the radial direction. The rotor 9 can be arranged radially inside or outside of the stator 6. For rotation of the rotor 9, a motor controller 11 controls the current in the plurality of stator coils 7 to energize the coils 7 sequentially, wherein the frequency of the alternating current (AC) in each of the stator coils 7 is proportionate to the speed of the rotor 9.

The rotor 9 is drivingly connected to the wheel 3. The motor controller 11 is connected to a battery 12 and the electric motor 5. The motor controller 11 is configured in a first motor operating mode to supply current to the stator coils 7 for inducing a rotation of the rotor 9 for driving the traction wheel 3. The motor controller 11 is configured in a second motor operating mode to supply current to at least one of the stator coils 7 suitable for inducing a vibration of at least one of the stator coils 7 or the rotor 9, without inducing a rotation of the rotor for driving the wheel 3. This has the advantage that a dedicated speaker or vibration device is not required to provide the audible signal. The number of parts and the complexity of manufacture of the electric vehicle can therefore be reduced, thus reducing costs.

The vibration of at least one of the coils 7 or the rotor 9 is preferably in the frequency range of 20 Hz to 20 KHz, thus in the audible frequency range. It may however also be possible to vibrate the coils 7 or the rotor 9 outside the audible frequency range to produce an audible signal via the resonant vibration of parts of the electric vehicle connected to the electric motor 5.

By applying current to one of the stator coils 7, the coil 7 generates a magnetic field such that it is attracted towards an opposing magnet 10 of the rotor 9. By arranging the coil 7 in the stator 6, such that a small movement of the coil 7 is permitted, the coil 7 can be made to vibrate within the stator 6 when an alternating current (AC) or a pulsed direct current DC is applied to it. The vibration may be induced in a direction indicated by the arrows 13. In the second motor operating mode an alternating current (AC) or a pulsed direct current (DC) can be supplied to at least one of the stator coils within the frequency range in the range of 20 Hz to 20 KHz.

Alternatively, if the stator coil 7 is held rigidly in the stator 6, for example by overmolding of the stator coils 7, then the vibration can be generated in the rotor 9 due the radial tolerances in the rotor bearings 14 allowing a small radial movement of the rotor 9 with respect to the stator 6.

The vibration, or sound thereby generated, may be used for indicating to a user that the power to the vehicle 1 has been turned on or off. In another embodiment, the vibration or sound thereby generated, may be used for indicating to a user the locking or unlocking of the electric vehicle 1. In a further embodiment, the vibration or sound thereby generated, may be used as an alarm when a suspected theft is detected. In a further embodiment the vibration or sound thereby generated may indicate a charge level of the battery 12.

The motor controller 11 can be configured in the second motor operating mode to supply current to at least one of the stator coils 7 for inducing a predetermined sequence of vibrations at at least two different frequencies of at least one of the stator coils 7 or the rotor 9, without inducing a rotation of the rotor 9 for driving the wheel. In this way a recognizable acoustic signal can be emitted by the motor. The sequence of vibrations could for example generate a sequence of audible sounds to play a predetermined melody.

In order to limit the power required by the battery to generate the vibration, the motor controller 11 can be configured to not supply current to at least one of the plurality of stator coils 7 in the second motor operating mode. Indeed, a vibration can be generated by supplying an alternating current (AC) or a pulsed direct current (DC) to only one of the plurality of coils 7.

The motor controller 11 can be configured in a third motor operating mode to supply current to the stator coils 7 for inducing a vibration at a predetermined frequency of at least one of the stator coils 7 or the rotor 9 independently of the rotor speed. In this way a vibration can be introduced during operation of the motor which can be translated into an audible signal to the user. A proximity sensor may be used to initiate third operating mode to start the vibration or audible signal to alert the user of traffic approaching from behind. Alternatively, a speed sensor arranged on or in the vehicle 1 may be used to initiate the third operating mode to start the vibration or audible signal when a predetermined speed threshold is reached, or to otherwise indicate the vehicle speed.

The invention also provides a method of controlling an electric motor 5, the electric motor 5 being drivingly connected to a wheel 3 of an electric vehicle 1 and comprising a stator 6 having a plurality of stator coils 7, and a rotor 9 arranged rotatably with respect to the stator 6 and drivingly connected to the wheel 3. The method comprising providing a battery 12 and a motor controller 11, connected to the battery 12 and the electric motor 5, for controlling the current in the stator coils 7. In a first motor operating mode, the motor controller 11 supplies current to the stator coils 7 for inducing a rotation of the rotor 9 for driving the wheel 3, and in a second motor operating mode, the motor controller 11 supplies current to at least one of the stator coils 7 for inducing a vibration of at least one of the stator coils 7 or the rotor 9, without inducing a rotation of the rotor 9 for driving the wheel 3.

In the second motor operating mode the motor controller 11 can supply current to at least one of the stator coils 7 for inducing a predetermined sequence of vibrations at at least two different frequencies of at least one of the stator coils 7 or the rotor 9, without inducing a rotation of the rotor 9 for driving the wheel 3. This can be achieved by changing the frequency of the alternating current (AC) or pulsed direct current (DC) supplied to the coil 7. The motor 5 can therefore be capable of playing predetermined melodies.

In a further embodiment there is a third motor operating mode wherein current is supplied to the stator coils 7 for inducing a vibration at a predetermined frequency of at least one of the stator coils 7 or the rotor 9 independently of the rotor speed. In this way a vibration can be introduced during operation of the motor 5 which can be translated into an audible signal to the user. The vibration or audible signal in this operating mode may be used in combination with a proximity sensor to alert the user of traffic approaching from behind. Alternatively, it could be used to indicate battery level or vehicle speed.

The motor controller 11 is arranged together with the battery 12 within the downtube of the electrically assisted bicycle.

### LIST OF REFERENCE NUMERALS

- 1.: Electric vehicle
- 2.: Frame
- 3.: First wheel
- 4.: Second wheel
- 5.: Electric motor
- 6.: Stator
- 7.: Coil
- 8.: Motor axis
- 9.: Rotor
- 10.: Magnet
- 11.: Motor controller
- 12.: Battery
- 13.: Coil vibration direction
- 14.: Rotor bearing

## Claims

1. An electric vehicle (1) comprising,
- a frame (2) supporting at least one wheel (3, 4), and
- an electric motor (5) arranged for driving the wheel (3, 4), the electric motor (5) comprising a stator (6) having a plurality of stator coils (7), and a rotor (9) arranged rotatably with respect to the stator (6) and drivingly connected to the wheel (3, 4),
- a battery (12),
- a motor controller (11), connected to the battery (12) and the electric motor (5), for controlling the current in the stator coils (7),
- wherein the motor controller (11) is configured in a first motor operating mode to supply current to the stator coils (7) for inducing a rotation of the rotor (9) for driving the wheel, and
- wherein the motor controller (11) is configured in a second motor operating mode to supply current to at least one of the stator coils (7) suitable for inducing a vibration of at least one of the stator coils (7) or the rotor (9), without inducing a rotation of the rotor (9) for driving the wheel (3, 4).

2. An electric vehicle (1) according to claim 1, **characterized in that** the motor controller (11) is configured in the second motor operating mode to supply current to at least one of the stator coils (7) for inducing a predetermined sequence of vibrations at at least two different frequencies of at least one of the stator coils (7) or the rotor (9), without inducing a rotation of the rotor (9) for driving the wheel (3, 4).

3. An electric vehicle (1) according to claim 1 or 2, **characterized in that** the motor controller (11) is configured in a third motor operating mode to supply current to the stator coils (7) for inducing a vibration at a predetermined frequency of at least one of the stator coils (7) or the rotor (9) independently of the rotor speed.

4. An electric vehicle (1) according to claim 1 or 2, **characterized in that** in the second motor operating mode the motor controller (11) does not supply current to at least one of the plurality of stator coils (7).

5. An electric vehicle (1) according to one of the preceding claims, **characterized in that** in the second motor operating mode an alternating current (AC) is supplied to at least one of the stator coils (7) within the frequency range in the range of 20 Hz to 20 KHz.

6. An electric vehicle (1) according to one of the claims 1 to 4, **characterized in that** in the second motor operating mode a pulsed direct current (DC) is supplied to at least one of the stator coils (7) within the frequency in the range of 20 Hz to 20 KHz.

7. An electric vehicle (1) according to claim 1, **characterized in that** at least one of the stator coils (7) is not rigidly fixed with respect to other parts of the stator, to allow a radial displacement of the stator coil (7) with respect to the rotor (9), or that radial tolerances in the rotor bearings (14) allow a radial movement of the rotor (9) relative to the stator (6) for allowing a vibration of the rotor (9).

8. An electric vehicle (1) according to claim 1, **characterized in that** the electric vehicle (1) is an electrically assisted bicycle or an electric kick scooter.

9. Method of controlling an electric motor (5) drivingly connected to a wheel (3, 4) of an electric vehicle (1), the electric motor (5) comprising a stator (6) having a plurality of stator coils (7), and a rotor (9) arranged rotatably with respect to the stator (6) and drivingly connected to the wheel (3, 4),
the method comprising,
- providing a battery (12),
- providing a motor controller (11), connected to the battery (12) and the electric motor (5), for controlling the current in the stator coils (7),
- wherein, in a first motor operating mode, the motor controller (11) supplies current to the stator coils (7) for inducing a rotation of the rotor (9) for driving the wheel (3, 4), and
- wherein, in a second motor operating mode, the motor controller (11) supplies current to at least one of the stator coils (7) for inducing a vibration of at least one of the stator coils (7) or the rotor (9), without inducing a rotation of the rotor (9) for driving the wheel (3, 4).

10. Method according to claim 9, **characterized in that** in the second motor operating mode the motor controller (11) supplies current to at least one of the stator coils (7) for inducing a predetermined sequence of vibrations at at least two different frequencies of at least one of the stator coils (7) or the rotor (9), without inducing a rotation of the rotor (9) for driving the wheel (3,4).

11. Method according to claim 9 or 10, **characterized in that**, in a third motor operating mode the motor controller (11) supplies current to at least one the stator coils (7) for inducing a vibration at a predetermined frequency of at least one of the stator coils (7) or the rotor (9) independently of the rotor speed.

12. Method according to claim 9 or 10, **characterized in that** in the second motor operating mode the motor controller does not supply current to at least one of the plurality of stator coils (7).

13. Method according to one of the claims 9 to 12, **characterized in that** in the second motor operating mode an alternating current (AC) is supplied to at least one of the stator coils (7) within the frequency range in the range of 20 Hz to 20 KHz.

14. Method according to one of the claims 9 to 12, **characterized in that** in the second motor operating mode a pulsed direct current (DC) is supplied to at least one of the stator coils (7) within the frequency in the range of 20 Hz to 20 KHz.
